# EUROPEAN PATENT SPECIFICATION

(11) **EP 2 113 610 B1**
(45) Date of publication and mention of the grant of the patent: **24.10.2012**
(21) Application number: 08155373.7
(22) Date of filing: 29.04.2008
(51) Int. Cl.: E02F 3/36, F16B 21/16

(54) **Locking device for grappling links**
Verriegelungsvorrichtung für Greifergelenk
Dispositif de verrouillage pour articulation de grappin

(43) Date of publication of application: 04.11.2009
(73) Proprietor: Caterpillar Work Tools B. V., 5232 BJ 's-Hertogenbosch (NL)
(72) Inventor: Van Amelsfoort, Edward, 5232 BJ, 's Hertogenbosch (NL); Luyendijk, Joost, 5232 BJ, 's Hertogenbosch (NL)
(74) Representative: Modiano, Micaela Nadia

(56) References cited:
- US-A- 3 015 507
- US-A- 3 797 949
- US-A- 4 337 614
- US-A- 5 046 881
- US-A- 6 158 917

## Description

### Technical Field

This disclosure relates to locking devices for links, particularly for link groups for connecting dangling grapplers to carrier machines and links for multi-processor jawsets.

### Background

Dangling grapples, like scrapgrapples, orange peel grapples, clamshell grapples, logging grapples and the like, may be connected to the stick of material carrier machines, excavators or material handler equipment by link groups, also known in the art as a crossheads. A link group may thus carry the grapple weight and the load generated by the payload.

Link groups may be provided with a movable main pin extending through parallel bushings to facilitate mounting and dismounting of a grapple from the stick of the material carrier machine. When a grapple is in a rest position, for instance lowered to the ground, the main pin may be removed from the link group, so that the stick of the machine may be detached from the grapple.

To expedite operations, especially during dismounting procedures, operators may choose not to extract the main pin completely from the link group but only to slide it through the bushings far enough to allow the stick to move away from the link group. However, special care must be taken not to remove the pin completely and further work and caution may be required to avoid inadvertently moving the link group in such a manner to cause the pin to fall out, hence slowing work procedures.

The same care must be taken when another grappler is connected to the stick of the machine. In this case, operators may insert the main pin back in the link group, carefully check the position of the main pin to verify that the main pin is fully inserted, and lock the main pin into place.

The above problems may be encountered also in multi-processor devices, which may consist of a standard housing and interchangeable jawsets for different demolition applications. The jawsets may be connected to the standard housing by three large pins: two pins in a static setup and a third pin in a dynamic setup. Each of these pins has to be removed or displaced to change from one jawset to the another and, again, efficiency in the work flow may be negatively affected if the pins are completely removed or fall out and time is consumed in carefully positioning and checking the position of the main pin when the main pin is pushed back into place.

US 6,158,917 discloses a pin retention mechanism which prevents longitudinal and/or rotational movement of a mounting pin. The pin retention mechanism comprises a housing having an opening in which an end of a mounting pin is adapted to be located, and a removable member which is inserted into the housing adjacent the end of the pin. Longitudinal movement is prevented by abutment of an end of the pin on the removable member. The removable member may be provided with a protruding section which is adapted to extend through a groove in the end of the pin for preventing rotation thereof. The removable member is retained in the housing by a spring catch.

The present disclosure is directed, at least in part, to improving or overcoming one or more aspects of prior systems.

### Brief Summary of the Invention

In a first aspect, the present disclosure describes a locking device, according to claim 1.

In a second aspect, the disclosure describes a linking device comprising the locking device of the first aspect and a frame including spaced apart bushings to receive the pin, according to claim 14.

In a third aspect, the disclosure describes a method of locking a link, particularly a link of according to claim 17.

Other features and advantages of the present disclosure will be apparent from the following description of various embodiment, when read together with the accompanying drawings.

### Brief Description of the Drawings

Fig. 1 is an isometric view of an embodiment of a link for a grappler comprising a locking device according to the present disclosure;
Fig. 2 is a plan view of a main pin of the link for a grappler of Fig 1;
Fig. 3 is a partial cross section view of the link coupled to a stick of a material carrier machine, in which the main pin is in a first locking position and the face of a locking plate is not visible;
Fig. 4 is a partial cross section view of the link, coupled to the stick of the material carrier machine, in which the main pin is partially inserted and the face of a locking plate is visible;
Fig. 5 is a partial cross section view of the link, coupled to a stick of a material carrier machine, in which the main pin is in a second locking position and the face of a locking plate is not visible.

### Detailed Description

This disclosure generally relates to locking devices for links of dangling grapples and links of jawsets of multi-processor devices.

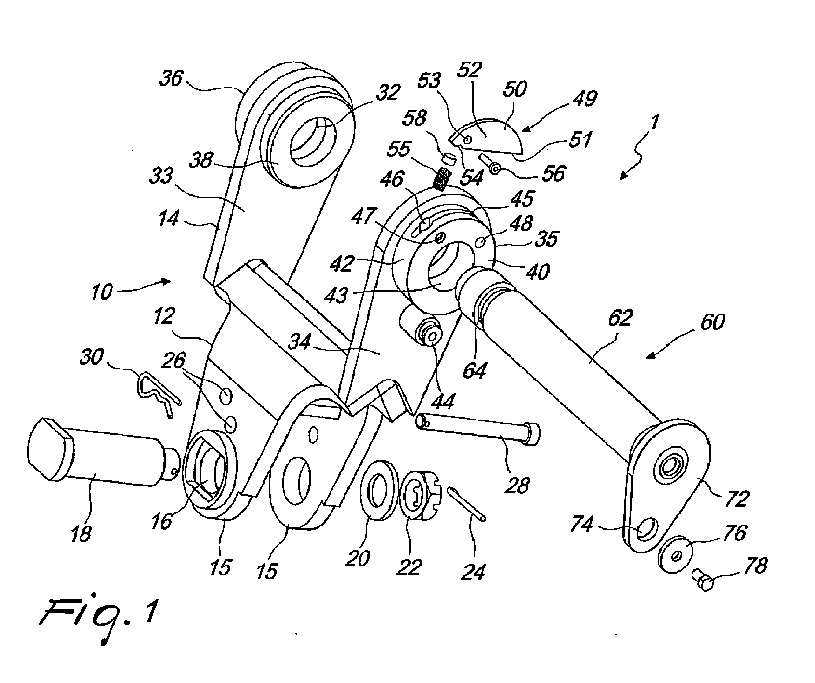

Fig. 1 illustrates an embodiment of a locking device for a link of a grappler (the grappler is not shown in the figures) according to the present disclosure.

A frame **10** of a link of a grappler may comprise a saddle **12** connected to a pair of arms **14.** The saddle **12** may further comprise a pair of flanges **15,** spaced apart for receiving a coupling portion of the grappler. Each flange **15** may have a guide hole **16.** A grappler may be connected to the frame **10** by aligning the guide holes **16** to a corresponding hole in the coupling portion of the grappler and inserting a connecting pin **18** through the guide holes **16** and the corresponding hole in the grappler. A washer **20** and a nut **22** may be placed onto end of the inserted connecting pin **18** thereby connecting the saddle **12** to the grappler. A cotter **24** may further secure the connecting pin **18** to the saddle **12.**

Each flange **15** of saddle **12** may further comprise a pair of holes **26** for receiving a lock pin **28.** The lock pin **28** may be secured to the saddle **12** by a pin lock **30.**

An end of each arm **14** may be connected to the saddle **12.** A side of an arm **14** may face the corresponding side of the other arm **14.** These sides of arms **14** are hereinafter referred to as inner sides **33** and, accordingly, the opposite side of each inner side **33** of an arm **14** is hereinafter referred to as outer side **34.**

The free end of each arm **14** may carry a bushing **32.** Bushing **32** may extend through arm **14** with openings on inner side **33** and outer side **34** of each arm. Bushings **32** of arms **14** may be substantially aligned.

On outer side **34** of an arm **14,** a first outer boss **35** may circumvent the opening of the bushing **32.** A second outer boss **36** may circumvent the opening of the bushing **32** on the outer side **34** of the other arm **14.** Inner bosses **38** may be carried on the inner sides **33** around the openings of the bushings thereon. Outer bosses **35, 36** and inner bosses **38** may assist in extending the length of bushings **32** such that the openings of bosses **35, 36, 38** operate as openings of bushings **32.** Adjacent first outer boss **35,** on outer side **34,** may be a threaded bushing **44.** Threaded bushing **44** may be positioned between the first outer boss **35** and the end of arm **14** connected to saddle **12.**

The first outer boss **35** may comprise a flat surface **40,** an outer curved surface **42** and an inner curved surface **43.** Outer curved surface **42** may include a slot **45.** The opening of slot **45** may face the free end of arm **14** and may partially encircle the outer curved surface **42.** At one end, slot **45** may widen to form a recess **46.** Particularly, recess **46** may be positioned adjacent to said end of slot **45.** Towards the opposite end, beyond recess **46,** slot **45** may extend from the outer curved surface **42** through the first outer boss **35** to form an opening on the inner curved surface **43.**

An aperture **47** and an opening **48** may be located on flat surface **40.** Aperture **47** and an opening **48** may be positioned adjacent to the slot **45.** Aperture **47** may be located close to the end of slot **45** proximal to recess **46.** Particularly, aperture **47** may be located towards the end of slot **45** such that the recess **46** is between aperture **47** and said end. Opening **48** may be located towards the opposite end of slot **45.** Aperture **47** and opening **48** may extend from the flat surface **40** into first outer boss **35** to the cavity of slot **45** such that aperture **47** and opening **48** may be contiguous with slot **45.**

A locking plate **49** may be provided, having size and shape suitable to fit into slot **45.** In one embodiment, locking plate **49** may have a hemispherical shape with a curved edge **50** and a linear edge **51.** The curvature of curved edge **50** may substantially correspond to the curvature of outer curved surface **42** of the first outer boss **35,** such that at alignment of curved edge **50** with the outer curved surface **42** a substantially plane surface may be formed. At such alignment the linear edge **51** may project through the opening of slot **45** on the inner curved surface **43** of the first outer boss into bushing **32.**

Locking plate **49** may comprise a face **52,** which may be visible prior to insertion of locking plate **49** into slot **45** and alignment of curved edge **50** with the outer curved surface **42.** On the other hand, at such alignment face **52** may be positioned within first outer boss **35** and may not be visible. Face **52** may thus function as an indicator to denote if the linear edge **51** is projecting into bushing **32.** Face **52** may be visible when linear edge **51** is not projecting into bushing **32** and may not visible when linear edge **51** projects into bushing **32.**

Face **52** may include a threaded hole **53.** An end of locking plate **49** that may be configured into a rib **54** may be adjacent to threaded hole **53.** Particularly, rib **54** may be formed by slanting of the linear edge on either side of the rib. More particularly, the rib may be chamfered.

A biasing element **55** may fit into recess **46** and may rest therein. The biasing element **55** may be of any suitable resilient material such as a spring. Rib **54** may abut and compress biasing element **55** upon insertion of locking plate **49** into slot **45.** Biasing element **55** may push on locking plate **49.** Locking plate **49** may be retained in the slot **45** by locking bolt **56.**

Locking bolt **56** may be connected to locking plate **49** at threaded hole **53** through aligned aperture **47.** In this connection, locking bolt **56** may also function as a pivot to the locking plate **49.** Consequently, pushing action of the biasing element **55** on one end of the locking plate **49** may turn the locking plate **49** about locking bolt **56** to effect movement of the locking plate **49** into slot **45** and to effect projection of linear edge **51** through the opening of the slot **45** on the inner curved surface **43** of the first outer boss into the bushing **32.** Particularly, the biasing element **55** may exert a sufficient force to pivot the locking plate **49** about 15 to 20 degrees.

A stud **58** may be positioned between the biasing element **55** and the locking plate **49.** Stud **58** may effect an even distribution of the force exerted by the biasing element **55** onto the locking plate **49.**

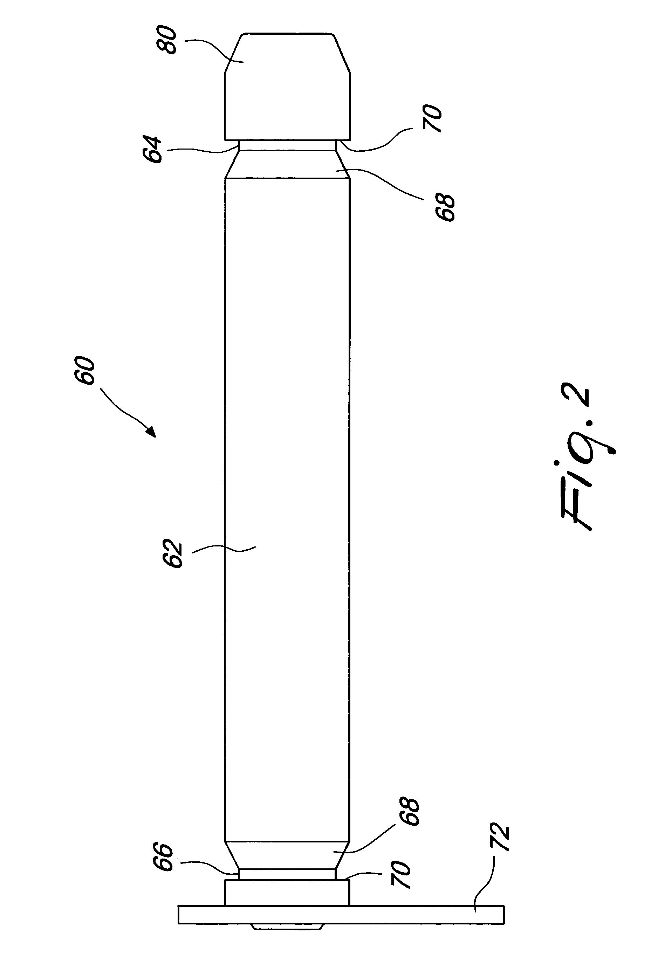

A main pin **60** may be provided for insertion through bushings **32** on arms **14.** With reference to Fig. 2, main pin **60** may comprise a shank **62.** The shank **62** may comprise a first groove **64** and a second groove **66.** Each groove may include an oblique wall **68** and an upright wall **70.** First groove **64** and the second groove **66** may be symmetrical and may be positioned on the shank **62** in an opposite orientation. Accordingly, the oblique walls **68** of grooves **64, 66** may face inwardly, with respect to the shank **62,** towards each other. Upright walls **70** may face the ends of shank **62.**

With the main pin **60** inserted into bushings **32,** first groove **64** and second groove **66** may operate with the locking plate **49** to control the movement of the main pin **60** through bushings **32.** Each groove **64, 66** may engage with locking plate **49** independently. Main pin **60** may be in a first locking position when the locking plate **49** is engaged in the first groove **64** and may be in a second locking position when the locking plate **49** is engaged in the second groove **64.**

Pushing action of biasing element **55** on one end of the locking plate **49** may turn locking plate **49** about the locking bolt to effect movement of the locking plate into slot **45** and to effect projection of linear edge **51** into the bushing **32.** Consequently, when the main pin **60** is inserted though the bushings **32,** locking plate **49** may engage the shank **62** and the grooves **64, 66.** Particularly, locking plate **49** may have a continuos pressing engagement with the main pin **60.** Such an engagement may be effected by the force exerted by the biasing element **55** on the locking plate **49.**

The locking plate **49** may enter or exit either groove **64, 66** at the oblique wall **68** by sliding along said wall. Upright wall **70** may serve as an abutment surface to restrict movement of the locking plate out of the groove **64**, **66** from said wall.

Main pin **60** may further comprise a locking flange **72** connected to one end of the shank **62**. Locking flange **72** may be shaped as a tear drop and may carry a cavity **74**. Main pin **60** may be fastened to an arm **14** by the locking flange **72**. At complete insertion of the main pin **60** intro bushings **32**, the locking flange **72** may abut against first outer boss **35** and the threaded bushing **44** may project into the aligned cavity **74**. A washer **76** and bolt **78** may be used to fasten the locking flange **72** to the arm **14**. The opposite end of shank **62** may be a leading end **80** comprising a rim with a bevelled edge to ease insertion through the bushings **32**.

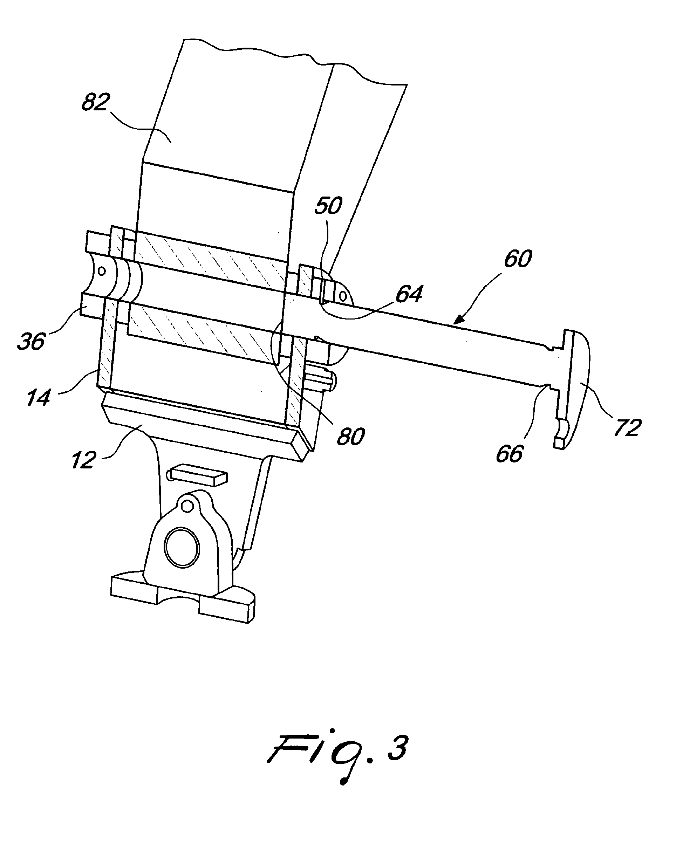

Operation of the device according the present disclosure will be now described with reference to Figs. 3 through 5.

With reference to Fig. 3, the main pin **60** may be locked in the first locking position by the locking plate **49** engaging the first groove **64**. Extraction of the main pin **60** out of the bushings **32** and frame **10** may be prevented by the abutment of the locking plate **49** with the upright wall **70** of the first groove **64**. As the locking plate **49** is positioned in first groove **64**, the face **52** of the locking plate **49** is not visible, indicating that the main pin **60** is locked in the first locking position. In this position, a stick **82** of the material carrier machined, having a passage, may be positioned between arms **14** of frame **10.** The passage may be aligned with the bushings **32** and stick **82** may be positioned for coupling with the arms **14**.

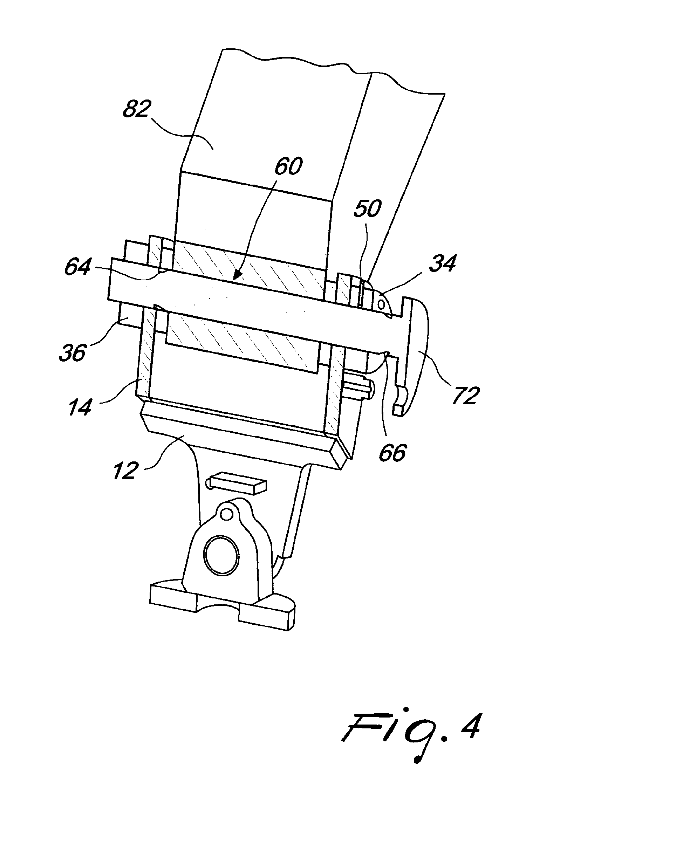

With reference to Fig. 4, the leading end **80** may be pushed though the bushing **32** of one arm **14** into the passage. As the leading end **80** starts to move, the locking plate **49** may engage and slide along the oblique wall **68** out of first groove **64**. Movement of locking plate **49** along oblique wall **68** and out of first groove **64** may push the locking plate **49** against the exerting force of biasing element **55** thereby turning the locking plate **49** about locking bolt, in the opposite direction, to effect movement of the locking plate **49** through the opening of the slot 45 on the inner curved surface **43** out of bushing **32**. With the locking plate **49** positioned out of first groove **64**, face **52** may be visible indicating that the main pin is not in a locking position. Face **52** may remain visible until the locking plate **49** is in a locking position.

Main pin **60** may be pushed with sufficient force to overcome the exerting force of the biasing element **55** and to effect movement of the locking plate **49** out of the first groove **64**. If sufficient force is not exerted the locking plate **49** may slide back along oblique wall **68** into first groove **64**.

The first locking position may be overridden by inserting a rod into opening **48** on flat face **40** of the first outer boss **35**. The locking plate **49** may be held in a disengagement position by the rod thereby allowing the main pin to be completely removed from bushing **32.** In the disengagement position the locking plate **49** may not be in contact with the shank **62.**

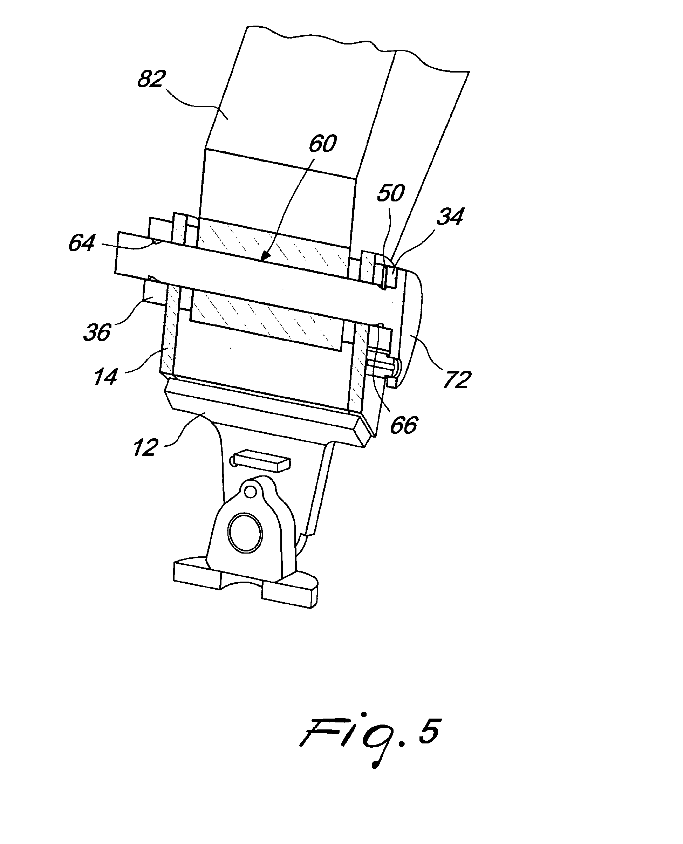

With reference to Fig. 5, the main pin **60** may be pushed through passage into bushings **32** of the other arm **14.** The main pin **60** may progress through the bushings **32** till locking plate **49** engages into second groove **66.** Locking plate **49** may slide along oblique wall **68** into second groove **66.** Further movement of the main pin **60** through bushings **32** may be prevented by the abutment of the locking plate **49** with the upright wall **70** of the second groove **66.** With locking plate **49** in second groove **66** the face **52** of the locking plate **49** may not be visible indicating that the main pin **60** may be locked in the second locking position. In the second locking position first groove **64** may be positioned within second outer boss **36.**

The skilled person will appreciate that the locking device according to the invention may be effected with one groove such that the main pin **60** is secured to arm **14** in the first locking position during mounting or dismounting of a link to a material carrier machine or changing of a grappler. Additionally, correct insertion of main pin **60** may be effected with one groove such that, in operation, the main pin **60** is secured to arm **14** in the second locking position.

The material used for constituting parts of the locking device may be metals, like steel or any other material having characteristics similar to such metals.

### Industrial Applicability

This disclosure describes a locking device for locking devices for links of dangling grapples and links of jawsets for multi-processor devices. The main pin **60** is securely held in the bushing **32** by the locking pin **49** in the first locking position. Consequently, any inadvertent of the moving the frame **10** will not cause the main pin **60** to fall out. Dispensing with cautionary practices which may cause the main pin **60** to fall out increases efficiency of mounting or dismounting a link to a material carrier machine or changing of a grappler.

Particularly, locking the main pin **60** in the bushing **32** during maintenance procedures avoids the need to manually hold or support the main pin **60.**

The industrial applicability of the locking device as described herein will have been readily appreciated from the foregoing discussion.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

The foregoing embodiments are therefore to be considered in all respects illustrative rather than limiting of the invention described herein. Scope of the invention is thus indicated by the appended claims, rather than the foregoing description, and all changes that come within the meaning of the claims are therefore intended to be embraced therein.

## Claims

1. A locking device, particularly for a link of a grappler, comprising:
a movable pin (60) provided with at least one groove (64) displaced from one end (80) of pin (60);
a locking plate (49) to engage the groove (64);
a boss (35) having a slot (45) to receive the locking plate (49), the slot (45) having a recess (46); and
a biasing element (55) positioned in the recess (46) to push the locking plate (49) in the groove (64), wherein the engagement of the locking plate (49) into the groove (64) locks the pin (60).

2. The locking device according to claim 1 wherein the locking plate (49) engages the groove (64) in a first locking position of the pin (60).

3. The locking device according to claim 1 or 2 wherein the locking plate (49) includes an indicator portion (52) to signal disengagement of the locking plate (49) from the groove (64).

4. The locking device according to claim 1, 2 or 3 including a second groove (66) displaced from the opposite end of the pin (60) to lock the pin (60) in a second locking position.

5. The locking device according to claim 4 wherein each groove (64,66) circumvents the pin (60).

6. The locking device according to claim 5 wherein each groove (64,66) has a oblique wall (68) for sliding engagement of the pin (60) with each groove (64,66).

7. The locking device according to claim 6 wherein each groove (64,66) has an upright wall (70) opposite the oblique wall (68) for abutting engagement with the pin.

8. The locking device according to claim 4, 5, 6 or 7 wherein the first groove (64) and the second groove (66) are symmetrical and are positioned on the shank (62) in an opposite orientation.

9. The locking device according to any one of the preceding claims wherein the biasing element (55) is a spring.

10. The locking device according to claim 9 wherein the spring (55) is displaced to one end of the locking plate (49).

11. The locking device according to claim 9 or 10 including a stud (58) is positioned between the spring and the locking plate.

12. The locking device according to claims 9, 10 or 11 wherein the locking plate (49) has a continuous pressing engagement with the pin (60).

13. The locking device according to any one of the preceding claims wherein the locking plate (49) is a hemispherical disc.

14. A linking device comprising the locking device according to any of the preceding claims, and a frame (10) having spaced apart bushings (32) to receive the pin.

15. The linking device according to claim 14 wherein the locking plate (49) engages with the pin (60) through said slot (45).

16. The linking device according to claim 14 or 15 wherein the locking plate (49) is pivotally connected to the boss (35).

17. A method of locking a link of a grappler comprising the steps of:
providing a frame (10) having spaced apart bushings (32);
providing a boss (35) on at least one of the bushings (32), the boss (35) having a slot (45) to receive a locking plate (49);
positioning a biasing element (55) in a recess (46) provided in the slot (45) for pushing the locking plate (49);
threading a pin (60) having a groove (64) through the spaced apart bushings (32) with a continuous pressing engagement between the locking plate (49) and the pin (60), wherein the groove (64) is displaced from one end (80) of pin (60); and
engaging the locking plate (49) into the groove (64).

18. The method according to claim 17 wherein the step of engaging the locking plate (49) into the groove (64) includes providing a sliding engagement between the locking plate (49) and the groove (64).

## Patentansprüche

1. Eine Verriegelungsvorrichtung, insbesondere für ein Gelenk eines Greifers, die Folgendes umfasst:
einen beweglichen Stift (60), der mit mindestens einer Rille (64) versehen ist, die von einem Ende (80) des Stifts (60) versetzt ist,
eine Verriegelungsplatte (49) zum Eingreifen in die Rille (64),
einen Beschlag (35), der einen Schlitz (45) zur Aufnahme der Verriegelungsplatte (49) hat, wobei der Schlitz (45) eine Aussparung (46) hat, und
ein Vorspannungselement (55), das in der Aussparung (46) positioniert ist, um die Verriegelungsplatte (49) in die Rille (64) zu drücken, wobei der Eingriff der Verriegelungsplatte (49) in die Rille (64) den Stift (60) verriegelt.

2. Die Verriegelungsvorrichtung gemäß Anspruch 1, worin die Verriegelungsplatte (49) in einer ersten Verriegelungsposition des Stifts (60) in die Rille (64) eingreift.

3. Die Verriegelungsvorrichtung gemäß Anspruch 1 oder 2, worin die Verriegelungsplatte (49) einen Anzeigeabschnitt (52) zum Signalisieren eines Lösens der Verriegelungsplatte (49) von der Rille (64) einschließt.

4. Die Verriegelungsvorrichtung gemäß Anspruch 1, 2 oder 3, die eine zweite Rille (66) einschließt, die vom gegenüberliegenden Ende des Stifts (60) versetzt ist, um den Stift (60) in einer zweiten Verriegelungsposition zu verriegeln.

5. Die Verriegelungsvorrichtung gemäß Anspruch 4, worin jede Rille (64, 66) den Stift (60) umgeht.

6. Die Verriegelungsvorrichtung gemäß Anspruch 5, worin jede Rille (64, 66) eine schräge Wand (68) für verschiebbaren Eingriff des Stifts (60) mit jeder Rille (64, 66) hat.

7. Die Verriegelungsvorrichtung gemäß Anspruch 6, worin jede Rille (64, 66) eine aufrechte Wand (70) hat, die der schrägen Wand (68) gegenüber liegt, für anstoßenden Eingriff mit dem Stift.

8. Die Verriegelungsvorrichtung gemäß Anspruch 4, 5, 6 oder 7, worin die erste Rille (64) und die zweite Rille (66) symmetrisch und in einer gegenüberliegenden Ausrichtung am Schaft (62) positioniert sind.

9. Die Verriegelungsvorrichtung gemäß einem beliebigen der obigen Ansprüche, worin das Vorspannungselement (55) eine Feder ist.

10. Die Verriegelungsvorrichtung gemäß Anspruch 9, worin die Feder (55) an ein Ende der Verriegelungsplatte (49) verschoben wird.

11. Die Verriegelungsvorrichtung gemäß Anspruch 9 oder 10, die einen Bolzen (58) einschließt, der zwischen der Feder und der Verriegelungsplatte positioniert ist.

12. Die Verriegelungsvorrichtung gemäß Anspruch 9, 10 oder 11, worin die Verriegelungsplatte (49) einen kontinuierlichen Presseingriff mit dem Stift (60) hat.

13. Die Verriegelungsvorrichtung gemäß einem beliebigen der obigen Ansprüche, worin die Verriegelungsplatte (49) eine halbkugelförmige Scheibe ist.

14. Eine Gelenkvorrichtung, die die Verriegelungsvorrichtung gemäß einem beliebigen der obigen Ansprüche und einen Rahmen (10) mit beabstandeten Buchsen (32) zur Aufnahme des Stifts umfasst.

15. Die Gelenkvorrichtung gemäß Anspruch 14, worin die Verriegelungsplatte (49) in den Stift (60) durch den Schlitz (45) eingreift.

16. Die Gelenkvorrichtung gemäß Anspruch 14 oder 15, worin die Verriegelungsplatte (49) drehgelenkig mit dem Beschlag (35) verbunden ist.

17. Ein Verfahren zur Verriegelung eines Gelenks eines Greifers, das folgende Schritte umfasst:
Bereitstellung eines Rahmens (10) mit beabstandeten Buchsen (32),
Bereitstellung eines Beschlags (35) an mindestens einer der Buchsen (32), wobei der Beschlag (35) einen Schlitz (45) zur Aufnahme einer Verriegelungsplatte (49) hat,
Positionierung eines Vorspannungselements (55) in einer Aussparung (46), die in dem Schlitz (45) bereitgestellt ist, zum Drücken der Verriegelungsplatte (49),
Einschrauben eines Stifts (60), der eine Rille (64) hat, durch die beabstandeten Buchsen (32) mit einem kontinuierlichen Presseingriff zwischen der Verriegelungsplatte (49) und dem Stift (60), wobei die Rille (64) von einem Ende (80) des Stifts (60) versetzt wird, und
Eingreifen der Verriegelungsplatte (49) in die Rille (64).

18. Das Verfahren gemäß Anspruch 17, wobei der Schritt des Eingreifens der Verriegelungsplatte (49) in die Rille (64) die Bereitstellung eines verschiebbaren Eingriffs zwischen der Verriegelungsplatte (49) und der Rille (64) einschließt.

## Revendications

1. Dispositif de verrouillage pour une articulation de grappin, comprenant :
un axe mobile (60) muni d'au moins une rainure (64) décalée par rapport à une extrémité (80) de l'axe (60) ;
une plaque de verrouillage (49) pour venir en prise avec la rainure (64) ;
un bossage (35) comportant une fente (45) pour recevoir la plaque de verrouillage (49), la fente (45) comportant un évidemment (46) ; et
un élément de sollicitation (55) placé dans l'évidement (46) pour pousser la plaque de verrouillage (49) dans la rainure (64), dans lequel l'engagement de la plaque de verrouillage (49) dans la rainure (64) verrouille l'axe (60).

2. Dispositif de verrouillage selon la revendication 1, dans lequel la plaque de verrouillage (49) vient en prise avec la rainure (64) dans une première position de verrouillage de l'axe (60).

3. Dispositif de verrouillage selon la revendication 1 ou 2, dans lequel la plaque de verrouillage (49) comprend une partie indicatrice (52) pour signaler le dégagement de la plaque de verrouillage (49) de la rainure (64).

4. Dispositif de verrouillage selon la revendication 1, 2 ou 3, comprenant une seconde rainure (66) décalée par rapport à l'extrémité opposée de l'axe (60) pour verrouiller l'axe (60) dans une seconde position de verrouillage.

5. Dispositif de verrouillage selon la revendication 4, dans lequel chaque rainure (64, 66) est formée autour de l'axe (60).

6. Dispositif de verrouillage selon la revendication 5, dans lequel chaque rainure (64, 66) présente une paroi oblique (68) pour un contact coulissant de l'axe (60) avec chaque rainure (64, 66).

7. Dispositif de verrouillage selon la revendication 6, dans lequel chaque rainure (64, 66) présente une paroi verticale (70) en face de à la paroi oblique (68) pour un contact d'appui avec l'axe.

8. Dispositif de verrouillage selon la revendication 4, 5, 6 ou 7, dans lequel la première rainure (64) et la seconde rainure (66) sont symétriques et sont placées sur la tige (62) dans une orientation opposée.

9. Dispositif de verrouillage selon l'une quelconque des précédentes revendications, dans lequel l'élément de sollicitation (55) est un ressort.

10. Dispositif de verrouillage selon la revendication 9, dans lequel le ressort (55) est décalé vers une extrémité de la plaque de verrouillage (49).

11. Dispositif de verrouillage selon la revendication 9 ou 10, comprenant un goujon (58) placé entre le ressort et la plaque de verrouillage.

12. Dispositif de verrouillage selon les revendications 9, 10 ou 11, dans lequel la plaque de verrouillage (49) est en contact de pression continu avec l'axe (60).

13. Dispositif de verrouillage selon l'une quelconque des précédentes revendications, dans lequel la plaque de verrouillage (49) est un disque hémisphérique.

14. Dispositif d'articulation comprenant le dispositif de verrouillage selon l'une quelconque des précédentes revendications, et
une structure (10) ayant des manchons espacés (32) pour recevoir l'axe.

15. Dispositif d'articulation selon la revendication 14, dans lequel la plaque de verrouillage (49) vient en prise avec l'axe (60) à travers ladite fente (45).

16. Dispositif d'articulation selon la revendication 14 ou 15, dans lequel la plaque de verrouillage (49) est reliée à pivotement au bossage (35).

17. Procédé de verrouillage d'une articulation de grappin comprenant les étapes consistant à :
prendre une structure (10) ayant des manchons espacés (32) ;
former un bossage (35) sur au moins l'un des manchons (32), le bossage (35) comportant une fente (45) pour recevoir une plaque de verrouillage (49);
placer un élément de sollicitation (55) dans un évidement (46) prévu dans la fente (45) pour pousser la plaque de verrouillage (49) ;
visser un axe (60) comportant une rainure (64) à travers les manchons espacés (32) avec un contact de pression continu entre la plaque de verrouillage (49) et l'axe (60), dans lequel la rainure (64) est décalée par rapport à une extrémité (80) de l'axe (60) ; et
engager la plaque de verrouillage (49) dans la rainure (64).

18. Procédé selon la revendication 17, dans lequel l'étape consistant à engager la plaque de verrouillage (49) dans la rainure (64) comprend de lafit de prévoir un contact coulissant entre la plaque de verrouillage (49) et la rainure (64).
